# EUROPEAN PATENT APPLICATION

(11) **EP 2 378 183 A2**
(43) Date of publication of application: **19.10.2011**
(21) Application number: 11250472.5
(22) Date of filing: 14.04.2011
(51) Int. Cl.: F16M 13/02

(54) **Mount for a flat panel display**

(30) Priority: 16.04.2010 GB 1006420
(71) Applicant: AVF Group Limited, Telford, Shropshire TF1 7YE (GB)
(72) Inventor: Short, Mark, West Midland DY6 8SR (GB)
(74) Representative: Bryer, Pamela Ruth

(57) **Abstract**

A mount (60) for a flat panel display comprises a substantially flat first component (62) having a coupling (86) for attachment to the flat panel display, and a plurality of spaced apart fixings (10) configured for securing the first component to an upright support so as to maximise the vertical load through the support and to minimise the horizontal load on the support. Each fixing (10) comprises a threaded shaft (12), a reconfigurable anchor (14) mounted on the shaft and a plug (16) arranged to substantially fill a fixing hole (64) provided through the support.

## Description

### Field of the invention

This invention relates to a mount for a flat panel display. The mount comprises fixings which are particularly useful for fixing items to a plasterboard wall.

### Background to the invention

With the increase in size and weight of flat panel displays there is an increasing need for mounts which are secure and easy to use. There is also a need to mount displays on different types of wall, including hollow interior walls made of plasterboard and the like. Mounting displays, particularly heavy displays, on hollow walls presents different challenges to mounting displays on solid walls, because the structure and composition of hollow walls mean that they are of limited structural integrity.

A variety of fixings have been developed for supporting loads on hollow walls. Hollow wall fixings generally work by having an anchor comprising expandable arms ("expansion" type) or wings ("toggle" type). The anchor is passed through a hole in the wall in a folded or "closed" position. After insertion, the anchor expands so that the arms or wings prevent the fixing from passing back through the wall, particularly when a load is applied to the fixing.

There are disadvantages of known hollow wall fixings. The "expansion" type puts the entire load locally around the edge of the hole. The "toggle" type requires a hole of sufficient width to allow passage of the anchor of the device, resulting in the smaller non-anchoring portion of the device being a loose fit in the hole allowing no lateral location of the fixing. Known hollow wall anchors are also fiddly and time consuming to use since they often require at least a portion of the item to be mounted to be held in position while the fixing is being inserted into the wall.

It is therefore an aim of the present invention to provide a mount for a flat panel display which addresses some of these problems.

### Summary of the invention

According to a first aspect of the present invention there is provided a mount for a flat panel display comprising:
a substantially flat first component having a coupling for attachment to said flat panel display, and
a plurality of spaced apart fixings configured for securing the first component to an upright support so as to maximise the vertical load through the support and to minimise the horizontal load on the support;
each fixing comprising a threaded shaft, a reconfigurable anchor mounted on the shaft and a plug arranged to substantially fill a fixing hole provided through the support.

Embodiments of the present invention therefore provide a mount that is capable of holding a flat panel display securely to a support and transferring the majority of the weight of the display vertically through the support so as to minimise the risk of the display coming away from the support or of the support itself being damaged under the weight of the display. The mount may therefore be useful for securing heavy flat panel displays on relatively thin or weak supports, such plasterboard walls. Moreover, the mount may be used on supports which were not originally intended to support such heavy items.

The fact that the mount comprises a flat first component helps to spread the load of the display over a large area and also ensures that the display is held as close to the support as possible so as to maximise the transfer of the load in a vertical direction. In addition, the fact that the plugs are configured to fill the fixing holes (and are larger than the shaft itself) also helps to distribute the load over a larger area of the support than would be obtainable with traditional screw-point fixings.

It will be understood that two or more mounts as defined above may be used together to support a single flat panel display. In which case, the mounts may be provided towards either end of the display to, again, maximise the spread of load to the support.

The mount may be configured to transfer most of the load of a flat panel display vertically through the support. In some embodiments, the mount may be configured to transfer a majority (i.e. over 50%) of the load of a flat panel display vertically through the support. In particular embodiments, at least 60%, 70%, 80%, 90% or 95% of the load of a flat panel display is transferred vertically through the support (with the remainder of the load being applied normally to the support). The mount may be therefore be configured as a flat-to-wall mount. In other words, the mount is much larger in a direction parallel to the support and much narrower in a direction normal to the support.

In some embodiments a single coupling is provided and said first component serves to distribute the load from-the coupling over a larger surface area (than through the coupling alone) and the fixings serve to evenly distribute the load through the support in a substantially vertical direction. Accordingly, the mount may be configured to reduce the concentration of force through the coupling over a larger area without increasing the number or complexity of the fixing points (i.e. couplings) for attaching the display to the mount. The coupling may be provided at or close to the centre of the first component.

The first component may comprise a plurality of holes towards its extremities for receiving the shaft of the fixings in order to secure the first component to the support. Providing the holes at the extremities of the first component further serves to distribute the load over as large an area of the support as possible. Three holes may be provided on the first component in a triangular (i.e. isosceles) arrangement. The holes may be in the form of elongated slots to allow for fine adjustment of the position of the first component relative to the support and fixings.

The regions of the first component in which the holes are located may be moulded to accommodate an end of the plug of the fixing which protrudes from the support.

The mount may comprise a second component for securing to a flat panel display to be mounted. The coupling may comprise complementary inter-engaging means provided on the first component and the second component in order to allow the first and second components to be releasably engaged. The complementary inter-engaging means may comprise at least one engaging member provided on one of the first or second components and at least one complementary receiving member on the other of the first or second components which receives the engaging member. The receiving member may be constituted by a recess, depression, channel, socket or the like which is provided on the first component. The second component may comprise a boss securable to said flat panel display and which is capable of engaging with the receiving member on the first component in order to engage the second component with the first component.

The mount may further comprise a locking means for locking the first and second components together when the first and second components are engaged. The locking means may comprise a retaining clip. The retaining clip may be configured to flex to allow the second component to engage with the first component. The retaining clip may be moveable between a locked position, in which disengagement of the first and second components is prevented, and an unlocked position, in which - disengagement of the first and second components is permitted. The retaining clip may be configured to pivot between the locked position and the unlocked position. The retaining clip may be biased to the locked position by a resilient member.

The mount may further comprise a release mechanism for unlocking the locking means. The release mechanism may be remotely activated. The release mechanism may be constituted by a pull-cord.

The first component may comprise a base plate and an adjustment plate. An adjustment means may be provided for vertical adjustment of the adjustment plate relative to the base plate.

The first component may further comprise a cover plate.

The plug may be immovably mounted on the shaft of the fixings such that the plug cannot move relative to the shaft. The shaft may be constituted by an elongate headless screw.

The anchor may be re-configurable between an extended configuration and a compact configuration in which the anchor has a reduced width in at least one direction. The anchor may be biased to the extended configuration. The anchor may comprise one or more arms which project outwardly in said extended configuration, and which are movable into said compact configuration. The anchor may comprise a pair of wings, said pair of wings being hinged together.

The width of the plug may correspond to the width of the anchor in its compact configuration. Alternatively, the plug may comprise a body and a head. In which case, the width of the body may correspond to the width of the anchor in its compact configuration. The body may be substantially cylindrical. Once more, this configuration helps to ensure that the load is evenly distributed through the support and that no weak points (like corners) are provided which would be much more susceptible to cracking under strain. The width of the head may be greater than that of the body, and greater than the width of the anchor in its compact configuration. The mount may further comprise a nut or a cap configured to be screwed onto a free end of the shaft to secure the first component to the support.

A second aspect of the present invention relates to the use of a mount according to the first aspect of the invention to maximise the transfer of load from a flat panel display vertically through a support.

According to a first related aspect to the present invention there is provided a fixing comprising
a threaded shaft,
a reconfigurable anchor mounted on the shaft, and
a plug immovably mounted on the shaft such that the plug cannot move relative to the shaft.

The fixing may be suitable for mounting an item on a support such as hollow wall. The item could be, for example, a mirror, picture, display, speaker, shelf, cupboard, rail or a mount for any such item. This aspect thus provides a mechanism which allows items (such as flat panel displays) to be securely attached to hollow supports such as plasterboard walls.

In an example, the shaft is constituted by an elongate headless screw. This arrangement is advantageous since it allows the fixing to be secured to the wall before the mount is attached to the fixing.

The anchor may be re-configurable between an extended or expanded configuration and a compact configuration, in which the anchor has a reduced width in at least one direction. The anchor may be biased towards the extended or expanded configuration. The anchor may be biased towards the open or extended configuration by the action of a spring.

The anchor may deform, collapse or compress into the compact configuration to allow it to pass through a hole in a support (e.g. wall). Once the anchor has passed through the support, it may return to its extended or expanded configuration. In its extended or expanded configuration, the anchor may rest against the support, thereby spreading the load which is supported by the fixing and preventing the fixing from passing back through the support. In an example, the anchor is made of resilient material which is able to reversibly deform from the extended configuration into the compact configuration, thereby allowing the anchor to pass through the hole. Alternatively, the anchor may comprise one or more arms which project outwards in an extended or 'open' position, and which may be moved or compressed into a compact or 'closed' position to allow the anchor to pass through the hole.

In an example, the anchor comprises a pair of wings. The pair of wings may be integrally formed. Alternatively, the pair of wings may comprise two separate components which are secured together such that they are allowed to move relative to each other. In an example, the wings are hinged together. The wings may be biased to the open or extended position by a spring. In a particular example, the spring is a torsion spring. The wings may be mounted on the shaft by a threaded nut.

The plug may be welded to the shaft, or it may be secured to the shaft by any other suitable means, such as adhesive. Alternatively, the plug may be moulded onto the shaft.

The dimensions of the plug may be such that the size of the plug corresponds to the size of the hole required in the support/wall to pass the anchor through in its compact form. The width of the plug may therefore correspond to the width of the anchor in its compact configuration. Conveniently, the plug may be made so that it fits snugly in the hole. This secures the shaft in the hole and prevents it from moving around. The plug may also help to transfer the weight of a mounted item over a large surface area, for example by transferring it vertically through the support.

In another example, the plug comprises a body and a head. The body may be configured so that it fits into a hole made in a wall to pass the anchor through. The width of the body may therefore correspond to the width of the anchor in its compact configuration. In an example, the body is substantially cylindrical so that it occupies a circular hole made in a wall. The free end of the body may be tapered. The tapered end of the plug helps to guide the body into the hole.

The width of the head may be greater than that of the body, and greater than the width of the anchor in its compact configuration. In a particular embodiment, the head comprises a disc which is of greater diameter than the body. Advantageously, the enlarged diameter of the head functions to prevent the body from passing through the wall and creates a reaction face against which the wall is clamped by the anchor. The disc also conceals the hole and the body of the plug, thereby improving the appearance of the fixing when in use.

The fixing may further comprise a nut or a cap configured to be screwed onto the free end of the shaft to secure an item mounted on the shaft.

According to a second related aspect of the invention there is provided a mount for a display comprising a component for securing to a support and at least one fixing according the first related aspect of the invention.

In an example, the component comprises a substantially flat plate.

The component may be made from any suitable material, such as metal, plastics or wood. In a particular embodiment, the component is made of metal.

One or more other types of fixings may be used to secure the component to the support in conjunction with the at least one fixing according to the first related aspect of the present invention. Alternatively, only fixings according to the first related aspect of the present invention may be used to secure the first component to the support.

In an example, the component comprises at least one hole through which the shaft of the fixing passes in order to secure the component to a support. A nut or cap may be screwed onto the free end of the shaft to secure the component on the shaft.

In another example, the component comprises first and second holes through which the shafts of first and second fixings pass to secure the component to the support. The first and second holes may be spaced apart in the component to spread the load of the display more effectively. The first and second holes may be provided in horizontal or vertical alignment with each other. In an embodiment, the holes are in horizontal alignment, the first hole being at or near to one side of the component, and the second hole being at or near to an opposite side of the component.

In a further example, the component comprises first, second and third holes which engage with first, second and third fixings to secure the component to the support. The holes may be arranged such that they are equidistant from each other, or two of the holes may be closer to each other than to the third hole. In a particular example, the first, second and third holes are positioned in an inverted isosceles triangular arrangement. The first and second holes may be in horizontal alignment closer to the top of the component, white the third hote is centrally positioned closer to the bottom of the component and an equal distance from the first and the second holes.

The holes may be round or they may be elongated to form slots. Slots are advantageous because they allow for fine adjustment of the position of the mount relative to the position of the fixings in the wall.

In an example, the region(s) of the component in which the hole(s) is/are located is/are moulded to accommodate an end or the head of the plug of the fixing which protrudes from the support. This allows the component to sit as close to the support as possible, thereby more effectively distributing the weight of the mounted item vertically through the support.

In an example, the mount comprises a first component for securing to a support and a second component for securing to an item to be mounted. In an example, the first and second components comprise complementary inter-engaging means which allow the first and second components to releasably engage with each other. This allows the first component to be secured to the support and the second component to be secured to the item to be mounted before the first and second components are connected together.

In an example, the complementary inter-engaging means comprises at least one engaging member provided on one of the first or second components and at least one complementary receiving member on the other of the first or second components which receives the engaging member. The receiving member may be constituted by a recess, depression, channel, socket or the like.

In a particular example, the second component comprises or constitutes a boss which is secured to an item to be mounted. The boss may be secured to the item to be mounted by any suitable means. In a particular example, the boss is secured to the item by a screw-thread. The boss may engage with a socket provided on the first component in order to engage the second component with the first component. The socket may be located substantially centrally on the first component in order to distribute the load of the mounted item effectively.

In an example, a locking means is provided to lock the first and second components together after they have been engaged. The locking means prevents the components from being unintentionally disengaged, thereby-providing additional security to the mounted item. In an example, the locking means is provided on the first component.

In an example, the locking means comprises a retaining clip in the form of a locking paddle. Alternatively, the retaining clip may be configured as a latch. The retaining clip may be configured to flex to allow the second component to engage with the first component, whereupon the retaining clip is relaxed to retain the first and second components together. The retaining clip may be configured to contact the second component to retain the two components together. Alternatively, the retaining clip may prevent disengagement of the second component from the first component.

The retaining clip may be formed as a discrete component or the retaining clip may be integral with the first component.

Multiple retaining clips may be employed for added security.

In an example, the retaining clip may be configured to pivot about an axis. The retaining clip may be biased outwardly of the first component. As the second component is connected to the first component, the retaining clip may be pivoted inwards against its bias by the second component. Once the second component is fully engaged with the first component, the clip is allowed to return to its outward position. The outward position of the clip may correspond to a locked position which prevents disconnection of the first and second components.

The retaining clip may be biased outwardly by the action of a resilient member, such as a spring.

In an example, a release mechanism is provided to unlock the locking means, thereby allowing the first and second components to be disconnected.

In an example, the release mechanism is configured to move the retaining clip to an unlocked position in which the second component can be disengaged from the first component. The release mechanism may cause the retaining clip to pivot against its bias to the unlocked position.

The release mechanism may be remotely activated.

In a particular example, the release mechanism is constituted by a pull-cord.

In an example, the first component comprises a base plate, an adjustment plate and, optionally, a cover plate. The base plate may be secured to a support. The adjustment plate may comprise engaging means for connecting to the second component. The adjustment plate may further comprise a retaining clip. Adjustment means may be provided for vertical adjustment of the adjustment plate relative to the base plate.

The cover plate may attach to a face of the first component which faces away from the support. The cover plate may comprise at least one hole in a corresponding position to the at least one hole which is provided on the first component to receive the fixing(s). The cover plate may further comprise an aperture through which the second component can pass in order to engage with the engaging means of the first component. The cover plate improves the appearance of the first component, and provides a flat surface for the mounted item to rest against.

The cover plate may be provided with sloped side walls around the aperture, which help to guide the second component into engagement with the first component.

In an embodiment, two or more mounts are provided. The mounts may be spaced apart to spread the load of the item to be mounted across the surface of the support.

In a further example, at least one spacer is provided. The spacer may be positioned between the mounted item and the support. The spacer may be positioned at a distance from the mount(s). The spacer functions to space the mounted item away from the wall by the same distance the mount spaces the item away from the wall. This causes the item to be spaced away from the wall by an equal distance at all points, thereby ensuring that the mounted item lies parallel to the support.

According to the third related aspect of the invention there is provided a mount for a display comprising:
a first component for securing to a support;
a second component for securing an item to be displayed;
a locking means for securing the first component to the second component; and
a release mechanism configured for remote-activation.

The release mechanism may be configured for unlocking the locking means to permit disengagement of the first and second components.

In an example, the locking means comprises a retaining clip in the form of a locking paddle. Alternatively, the retaining clip may be configured as a latch. The retaining clip may be configured to flex to allow the second component to engage with the first component, whereupon the retaining clip is relaxed to retain the first and second components together. The retaining clip may be configured to contact the second component to retain the two components together. Alternatively, the retaining clip may prevent disengagement of the second component from the first component.

The retaining clip may be formed as a discrete component or the retaining clip may be integral with the first component.

Multiple retaining clips may be employed for added security.

In an example, the retaining clip may be configured to pivot about an axis. The retaining clip may be biased outwardly of the first component. As the second component is connected to the first component, the retaining clip may be pivoted inwards against its bias by the second component. Once the second component is fully engaged with the first component, the clip is allowed to return to its outward position. The outward position of the clip may correspond to a locked position which prevents disconnection of the first and second components.

The retaining clip may be biased outwardly by the action of a resilient member, such as a spring.

In an example, the release mechanism is configured to move the retaining clip to an unlocked position in which the second component can be disengaged from the first component. The release mechanism may cause the retaining clip to pivot against its bias to the unlocked position.

In an example, the mount further comprises at least one fixing means according to the first related aspect of the invention.

It will be understood that optional features described above in relation to each of the various aspects of the invention can be applied equally to any of the other aspects of the invention.

### Brief description of the drawings

The invention will now be described, by way of example, with reference to the accompanying drawings, in which:
Figure 1 shows an exploded view of a fixing according to an embodiment of the present invention;
Figures 2a, 2b and 2c show views of the fixing of Figure 1;

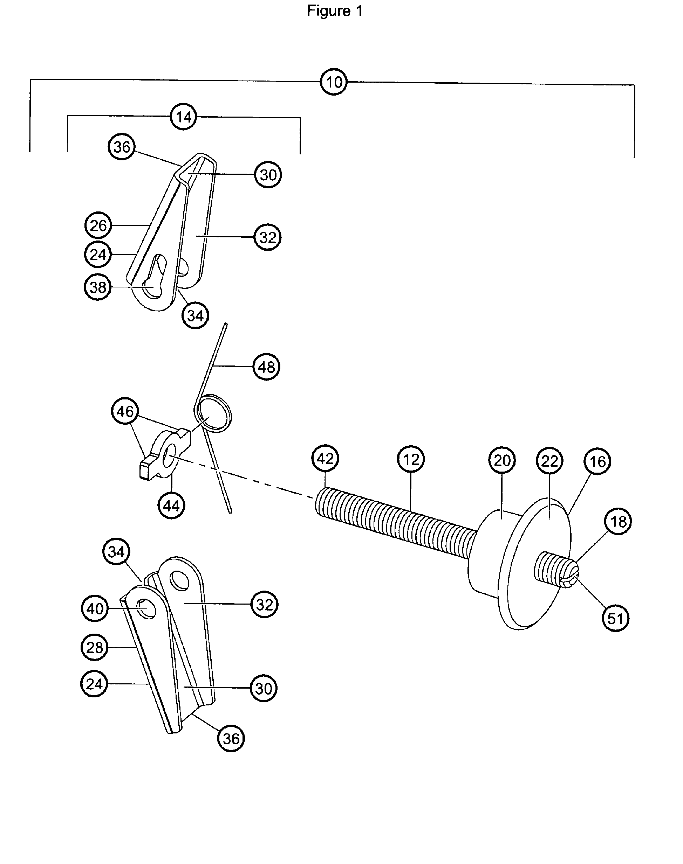

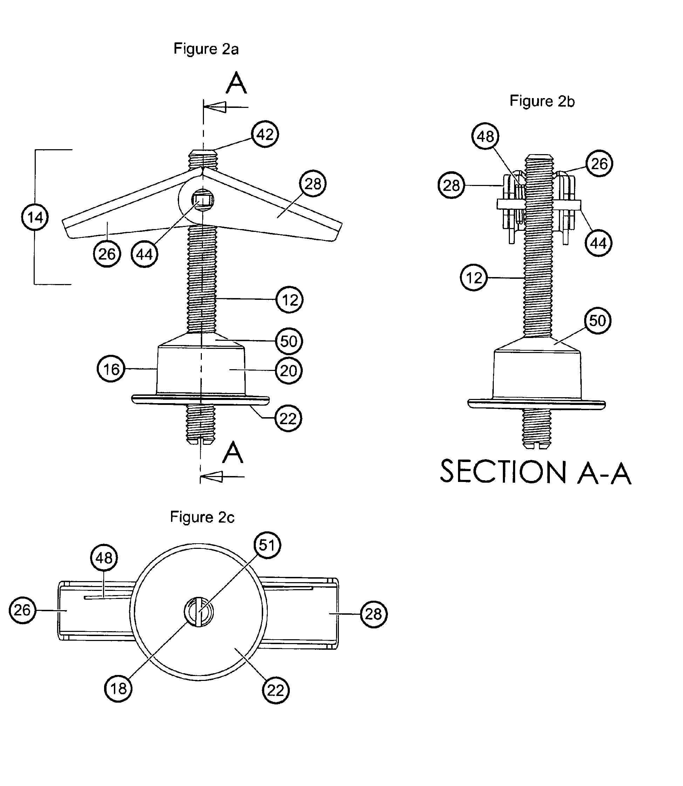

Figure 2a shows a side view of the fixing of Figure 1;
Figure 2b shows a view taken through section A-A of the fixing of Figure 2a;
Figure 2c shows an end view of the fixing of Figure 2a;

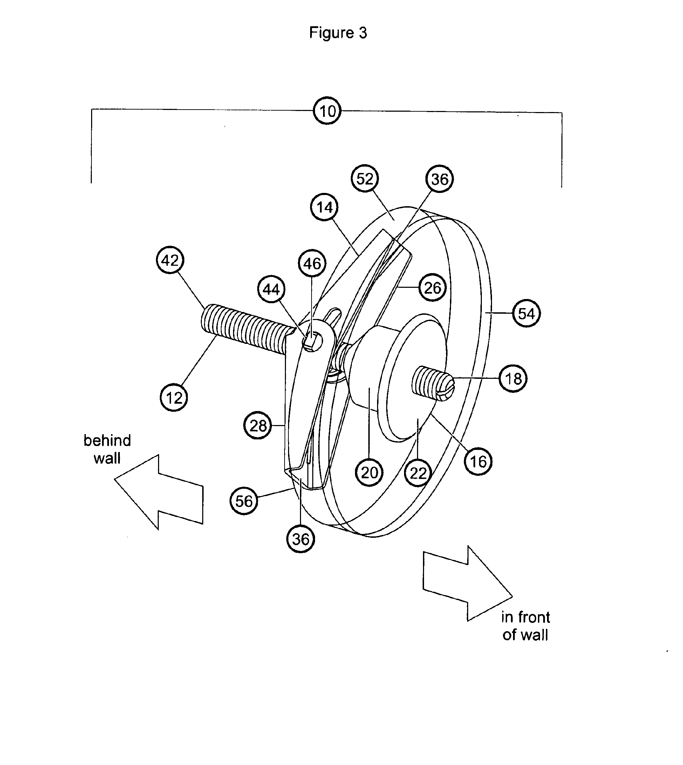

Figure 3 shows a perspective view of the fixing of Figure 1, in use;

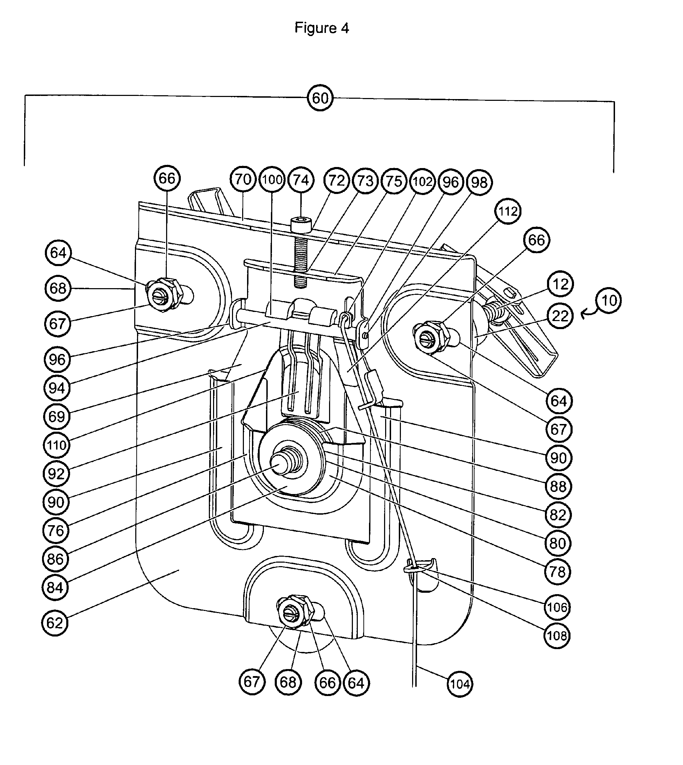

Figure 4 shows a front perspective view of a mount comprising fixings according to an embodiment of the present invention;

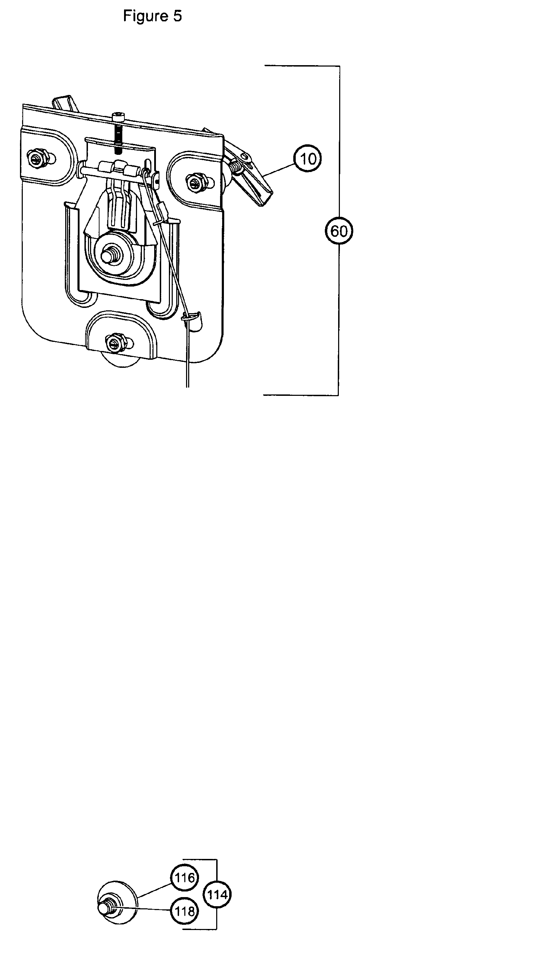

Figure 5 shows a front perspective view of the mount of Figure 4 together with a spacer, according to an embodiment of the present invention;

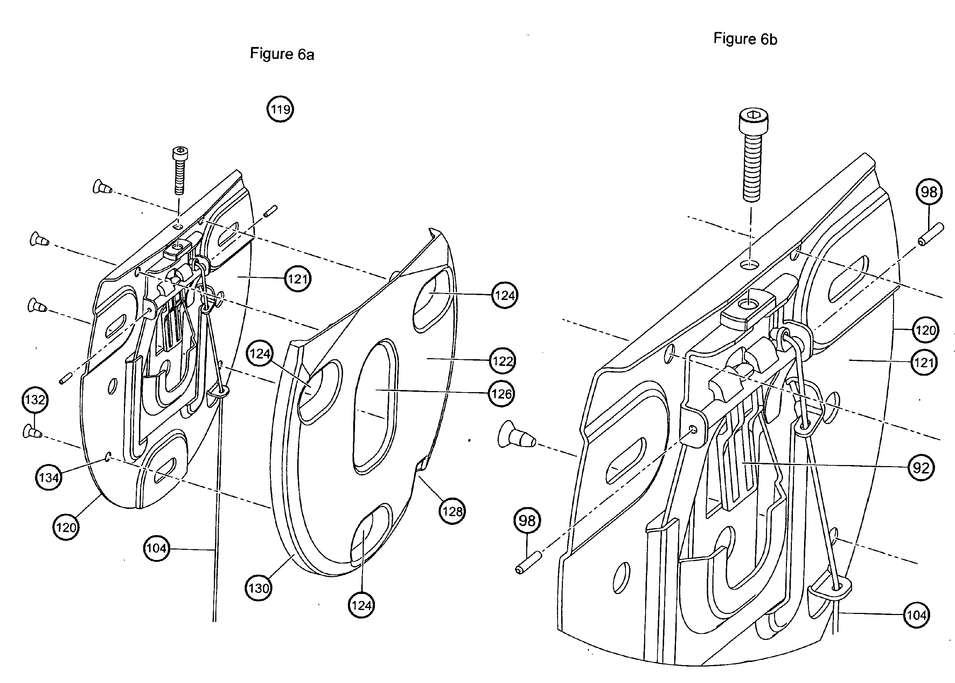

Figure 6a shows a front perspective view of a mount according to another embodiment of the present invention;
Figure 6b shows an enlarged sectional view of the rear plate of the mount of Figure 6a;

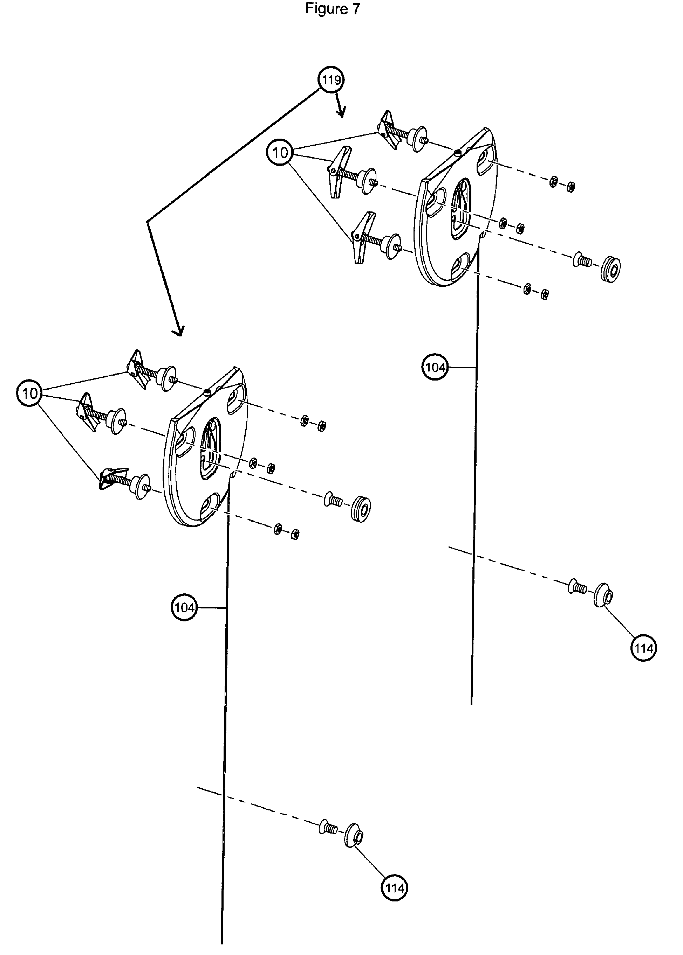

Figure 7 shows a pair of mounts as shown in Figures 6a and 6b, arranged for use together with a pair of spacers, according to an embodiment of the present invention.

### Detailed description of certain embodiments

With reference to Figure 1, there is illustrated a fixing 10 according to a first embodiment of the present invention. The fixing 10 comprises a shaft 12 constituted by a headless screw, an anchor 14 and a plug 16. The plug 16 is immovably mounted on the shaft 12 near to a first end 18 of the shaft 12. The plug comprises a cylindrical body 20 and a disc-shaped head 22 which is of greater diameter than the body 20. The head 22 of the plug 16 is positioned closer to the first end 18 of the shaft 12 than the body 20.

The anchor 14 comprises a pair of wings 24 comprising an inner wing 26 and an outer wing 28. Each of the wings 26, 28 comprises a substantially flat rectangular panel 30. Along the length of each long side of the rectangular panel 30 a flange 32 is provided. In the embodiment shown, the panel 30 and the flanges 32 are integrally formed from a single piece of material, although in alternative embodiments the flanges may be formed as separate components. The flange 32 is wider at the inner end 34 of the wing 26, 28 and tapers toward the outer end 36 of each wing 26, 28. In the wider, inner end of the flanges 32 of the inner wing 26, slots 38 are provided. In the wider, inner end of the flanges 32 of the outer wing 28, holes 40 are provided. When the anchor 14 is assembled onto a second end 42 of shaft 12 (as shown in Figures 2a through 2c), the flanges 32 of the inner wing 26 fit within the flanges 32 of the outer wing 28 so that the slots 38 align with the holes 40. The two wings 26, 28 are secured together by a nut 44 having a pair of opposing tabs 46 which extend outwardly and pass through the holes and slots 38, 40 in the wing flanges 32. The wings 26, 28 are thereby pivoted about the tabs 46, allowing them to move relative to one another.

The anchor also comprises a torsion spring 48. The spring 48 is looped around the nut 44 such that the ends of the spring 48 rest against the insides of the wing panels 30, biasing the wings into an open configuration.

Figures 2a and 2b show the fixing fully assembled, in which the nut 44 of the anchor 14 is threaded onto the second end 42 of the shaft 12. As can be seen in these views, an end 50 of the body 20 of the plug 16 which is nearest to the anchor 14 is tapered inwardly. The tapered end 50 of the plug 16 helps to guide the body 20 into a hole in a wall. Figure 2c is a front end view of the fixing 10, showing the plug head 22 and the first end 18 of the shaft 12 which is provided with a slot 51 for a screwdriver. The wings 26, 28 can be seen extending outwardly from behind the plug 16, held in place by the torsion spring 48.

Figure 3 shows the fixing 10 in use with a hollow wall 52 having a front face 54 and a rear surface 56. It will be understood that for illustrative purposes, only a portion of the hollow wall 52 is shown and it is presented as being partially transparent so as to show the arrangement of the fixing 10. The shaft 12 extends through a hole created in the wall 52. The body 20 of the plug 16 fits snugly within the hole and prevents the shaft 12 from moving about within the hole. The large diameter of body 20 also functions to create a large surface area for contact with the wall 52. The head 22 of the plug 16 lies flush with the front face 54 of the wall to prevent the plug 16 from passing through the hole in wall 52. The anchor 14 is positioned behind the wall 52.

The wings 26, 28 of the anchor 14 are in the open or extended configuration such that the outer ends 36 of the wings 26, 28 rest against and grip the rear surface 56 of the wall 52. A clamping force between the plug head 22 and the anchor wings 26, 28-results after the fixing 10 is tightened into position, as will be described below.

To insert the anchor into the wall 52, a hole must first be created in the wall 52 which is large enough to allow the anchor 14 to pass through in its closed or compact configuration. The size of the hole must also correspond to the size of the plug 16 so that the plug 16 fits snugly within the hole. Once the hole has been created, the outer ends 36 of the anchor wings 26, 28 are squeezed inwardly by hand, causing the wings 26, 28 to pivot about the tabs 46 on the nut 44 against their outward bias. The position of the anchor 14 near to the second end 42 of the shaft 12 allows the wings 26, 28 to be fully compressed inwardly until their outer ends 36 contact the shaft 12. The wings 26, 28 are then held in the compacted position while the second end 42 of the shaft 12 and the anchor 14 mounted thereon is inserted through the hole in the wall 52. Once the anchor 14 is through the hole, the force holding the wings 26, 28 in the compact configuration is released, allowing the wings 26, 28 to return to their extended conformation due to the action of the torsion spring 48. The plug is then pulled away from the wall 52 until the anchor 14 is in contact with the rear surface 56 of the wall 52. The screw thread which constitutes the shaft 12 is turned until the body 20 of the plug 16 is positioned in the hole and the head 22 of the plug 16 lies flat against the front face 54 of the wall 52. The friction between the anchor 14 and the rear surface 56 of the wall 52, created as the plug 16 is pulled away from the wall 52, prevents the anchor 14 from rotating when the screw 12 is turned. Finally the mechanism is tightened up with a flat-tipped screw driver in the slot 18 on the first end of shaft 12 to create a strong clamping force about the wall 52 between the head 22 and anchor 14.

With reference to Figure 4, there is illustrated a mount 60 according to a second embodiment of the present invention. The mount comprises a first component which includes a substantially flat metal base plate 62. The base plate 62 comprises three horizontal slots 64 in a triangular arrangement. Two of the slots 64 are positioned near to the top and close to the side edges of the base plate 62, and are horizontally aligned. The third slot 64 is positioned centrally close to the bottom edge of the base plate 62, and is equidistant from the other two slots 64. Through each slot 64 passes a shaft 12 of a fixing 10. The base plate 62 is secured onto each shaft 12 by a nut 66 and a locking nut 67. The locking nuts 67 prevent the nuts 66 from coming loose over time. The particular arrangement of slots 64 in the base plate 62 is important to spread the mounted load. However, it will be understood that alternative arrangements and/or an alternative number of fixings may be employed to fix the first component to the wall.

The regions 68 of the base plate 62 surrounding the slots 64 are moulded such that they protrude slightly from the rest of the base plate 62. The moulded regions 68 provide recesses in which the heads 22 of the fixings 10 are accommodated, allowing the base plate 62 to sit as close to the wall as possible and thereby effectively distributing the mounted load vertically through the wall.

The first component also includes an adjustment plate 69 that slots inside of the base plate 62 in a way that allows the adjustment plate 69 to slide up and down. The top of the base plate 62 bends outward to form a small lip 70 which lies perpendicular to the plane of the base plate 62. In the centre of the lip 70 a threaded hole 72 is provided. A screw 74 passes through the threaded hole 72 and through a further threaded hole 73 in a lip 75 provided at the top of the adjustment plate 69. By adjusting the screw 74, the adjustment plate 69 can be raised or lowered in relation to the base plate 62.

In the central region of the adjustment plate 69 a wall 76 is provided which projects outwardly from the adjustment plate 69. A front portion 78 of the wall 76 lies parallel with the adjustment plate 69. A U-shaped cut-out 80 in the front portion 78 of the wall 76 forms a socket 82.

The mount 60 further comprises a second component in the form of a boss 84, which is configured to be screwed onto the item to be mounted by a screw-thread 86. The boss 84 is cylindrical in shape and has a circumferential groove 88. In use, the groove 88 of the boss 84 mates with the U-shaped cut-out 80 of the socket 82 in order to engage the boss 84 with the adjustment plate 69. Rotation of the screw 74 therefore allows for fine vertical adjustment of the position of the boss 84 and therefore the item supported on the mount 60.

Between the centre of the base plate 62 and each side edge an L-shaped element 90 is provided, which projects outwardly from the base plate 62. The L-shaped elements 90 receive the adjustment plate 69 and thus function to locate the adjustment plate 69 in a manner that allows only vertical movement of the adjustment plate 69 within a limited range.

A retaining clip in the form of a substantially planar locking paddle 92 is provided to retain the boss 84 in engagement with the socket 82. The locking paddle 92 is affixed at its top end to the underneath of a horizontal bar 94 which is pivoted between a pair of outwardly projecting flanges 96 spaced apart near to the top of the adjustment plate 69. The bar 94 is held between the flanges 96 by a pair of pivot pins 98. On the top of the bar 94, opposite the attachment site of the locking paddle 92, two stops 100 are provided, which curve upwardly and inwardly toward the adjustment plate 69. A resilient member in the form of an inwardly curving tab 112 biases the paddle 92 in an outward position, while the stops 100 prevent the paddle 92 from projecting too far outwardly.

A loop fastening 102 is also provided on the top of the bar, adjacent to one of the stops 100. A nylon pull cord 104 is tied to the loop fastening 102. The pull cord 104 hangs down in front of the base plate 62 and the adjustment plate 69, and passes through a hole 106 in a flap 108 which is cut out of the base plate 62 near to its bottom corner. The pull-cord 104 constitutes a remotely activated release mechanism by which the locking paddle 92 can be moved to an unlocked position to permit the boss 84 to be disengaged from the socket 82. When the pull cord 104 is pulled, the bar 94 is caused to pivot such that the locking paddle 92 pivots inwardly towards the adjustment plate 69. A cut-out 110 is provided in the adjustment plate 69 and in the base plate 62 directly behind the locking paddle 92, so as to allow the locking paddle 92 to swing backward.

Figure 5 shows the mount of Figure 4 together with a spacer 114. The spacer 114 comprises a body 116 and a fixing screw 118. The spacer 114 is positioned on the rear of the item being mounted by means of the fixing screw 118 and functions to ensure that the mounted item is spaced from the wall by an equal distance at all points. In the absence of a spacer 114, a mounted item may tilt forwardly.

Figure 6a shows a third embodiment of the present invention in the form of a mount 119 comprising a first component 120, a cover 122 and a boss (not shown). The first component 120 is substantially the same as the first component of the mount 60 shown in Figure 4, as described above, and the boss (not shown) is identical to the second component of the mount 60. However, in the embodiment of Figure 6a, a base plate 121 is provided which is curved instead of being rectangular like the base plate 62 shown in Figures 4 and 5. The cover 122 comprises three holes 124 in a triangular arrangement which correspond to the positions of the fixings 10 (not shown). A central aperture 126 is also provided in the cover 122 through which the boss 84 is **slotted to** engage with the socket 82 on the first component 120. The side walls of the holes 124 and aperture 126 are sloped, to help guide components more easily through the holes, and to improve the appearance of the mount 60. A notch 128 is also provided in the cover 122 to accommodate the flap 106 through which the pull cord 104 passes and allowing the pull cord 104 to exit the first component 120. The edge 130 of the cover 122 curves rearwardly, such that when the cover 122 is mounted on the first component 120, the cover 122 completely encases the first component 120. The cover 122 is fixed to the first component 120 by a number of screws 132 which pass through small holes 134 in the base plate 121.

Figure 6b shows an enlarged view of a portion of the first component 120 of the mount 119 of Figure 6a.

Figure 7 shows an embodiment of the present invention in which two mounts 119 according to the embodiment of Figure 6a are used in conjunction with fixings 10 and spacers 114 to mount an item onto a hollow wall. However, it will be understood that any number of mounts, fixings and spacers may be employed to mount an item on a hollow wall, depending on the load required to be mounted. It will also be clear from Figure 7 that the pull cords 104 extend vertically downwardly, past the spacers 114 so that they can be accessed at or near to the base of the item being mounted. Accordingly, the first and second components can be remotely disengaged by pulling the lower portions of the pull cords 104, thereby facilitating quick and simple removal of the mounted item.

It will be appreciated by persons skilled in the art that various modifications may be made to the above-described embodiments without departing from the scope of the present invention.

## Claims

1. A mount for a flat-panel display comprising a substantially flat first component having a coupling for attachment to said flat panel display, and a plurality of spaced apart fixings configured for securing the first component to an upright support so as to maximise the vertical load through the support and to minimise the horizontal load on the support; each fixing comprising a threaded shaft, a reconfigurable anchor mounted on the shaft and a plug arranged to substantially fill a fixing hole provided through the support.

2. The mount according to claim 1 configured to transfer a majority of the load of a flat panel display vertically through the support.

3. The mount according to claim 1 or claim 2 configured as a flat-to-wall mount.

4. The mount according to any preceding claim wherein a single coupling is provided and said first component serves to distribute the load from the coupling over a larger surface area and the fixings serve to evenly distribute the load through the support in a substantially vertical direction.

5. The mount according to any preceding claim wherein the coupling is provided at or close to the centre of the first component.

6. The mount according to any preceding claim, wherein the first component comprises a plurality of holes towards its extremities for receiving the shaft of the fixings in order to secure the first component to the support.

7. The mount according to claim 6, wherein three holes are provided on the first component in a triangular arrangement.

8. The mount according to claim 6 or claim 7, wherein the holes are in the form of elongated slots.

9. The mount according to any one of claims 6 to 8, wherein the regions of the first component in which the holes are located are moulded to accommodate an end of the plug of the fixing which protrudes from the support.

10. The mount according to any preceding claim comprising a second component for securing to a flat panel display to be mounted.

11. The mount according to any preceding claim wherein the plug is immovably mounted on the shaft of the fixings such that the plug cannot move relative to the shaft.

12. The mount according to any preceding claim, wherein the shaft is constituted by an elongate headless screw.

13. The mount according to any preceding claim, wherein the anchor is re-configurable between an extended configuration and a compact configuration in which the anchor has a reduced width in at least one direction.

14. The mount according to any preceding claim wherein the anchor comprises one or more arms which project outwardly in said extended configuration, and which are movable into said compact configuration.

15. Use of a mount according to any preceding claim to maximise the transfer of load from a flat panel display vertically through a support.
